# EUROPEAN PATENT APPLICATION

(11) **EP 3 130 226 A1**
(43) Date of publication of application: **15.02.2017**
(21) Application number: 15180341.8
(22) Date of filing: 10.08.2015
(51) Int. Cl.: A01K 47/06

(54) **HONEYBEE BEHAVIOR MONITORING METHOD AND HONEYBEE BEHAVIOR MONITORING DEVICE AND SYSTEM USING THE SAME**

(71) Applicant: Jiang, Joe-Air, Taipei City 106 (TW)
(72) Inventor: JIANG, Joe-Air, Taipei City 106 (TW); YANG, En-Cheng, New Taipei City 238 (TW); CHUANG, Cheng-Long, New Taipei City 235 (TW); WANG, Chien-Hao, Keelung City 202 (TW); CHEN, Chi-Hui, Taichung City 414 (TW); HUANG, Yu-Kai, Tainan City 702 (TW); LIAO, Min-Sheng, New Taipei City 248 (TW); WU, Ching-Yun, Kaohsiung City 813 (TW)
(74) Representative: Strasser, Wolfgang

(57) **Abstract**

Disclosed are a honeybee behavior monitoring method, and a honeybee behavior monitoring device (1,2,2',2'') and a system using the same. The honeybee behavior monitoring device (1,2,2',2'') comprises a first sensing unit (11,21) disposed at an exterior of a beehive entrance, a second sensing unit (12,22) disposed at an interior of the beehive entrance and a counting unit (13,23) having a counter. The honeybee behavior monitoring method comprising: generating a first detection signal as the first sensing unit being activated by a honeybee passing through the beehive entrance; generating a second detection signal as the second sensing unit being activated by a honeybee passing through the beehive entrance; receiving the first signal of the first sensing unit and the second signal of the second sensing unit via the counting unit; and counting the number of honeybees passing in and out of a beehive via the counter. When the counting unit receives sequentially the second signal and the first signal, one count is added to a departing count when a honeybee is judged to be leaving the beehive, and one count is added to an entry count if the bee is judged to be entering the beehive.

## Description

### BACKGROUND OF THE INVENTION

### 1. Field of the Invention

The instant disclosure relates to mechanisms for monitoring honeybee behaviors, and more particularly, to a honeybee behavior monitoring method, and a honeybee behavior monitoring device and a system using the same for monitoring and analyzing the in-and-out activity of honeybees as they pass through the entrance of a beehive and the hive environment.

### 2. Description of Related Art

Honeybees are nature's main pollinators of plant breeding, and according to statistics, among the world's 1,500 kinds of crop species, two-thirds of the agricultural crops are pollinated by the honeybees which play a critical role in facilitating plant growths. But in recent years, a syndrome of colony collapse disorder (CCD) phenomenon is frequently heard and reported from around the world that large numbers of honeybees abruptly disappear for unknown reasons. Therefore, it is necessary to analyze the activities and habits of honeybee behaviors in order to gain a better understanding and thus able to provide the solutions.

Most research activities on the habits of honeybees in the past were carried out by employing a great deal of manpower for observing various behaviors of honeybees.

Such manual methods are not only time-consuming and labor-intensive, but also the staff cannot possibly access bee hives to monitor the situations around the clock. Moreover, the activity of beehives could only be judged and determined by sight and thus is inevitably error-prone and difficult at the same time to attempt to accurately analyze the data of these studies, particularly such method is ineffectual to implement when it comes to studying a large number of honeybees. Therefore, it is highly beneficial to find a precise and efficient monitoring mechanism for carrying out such research on honeybees and the hive environment.

In the conventional method of monitoring honeybees, RFID techniques were typically employed for monitoring honeybees but such techniques are limited to the monitoring of the tagged bees and tend to monitor individual groups of honeybees and not the activity of honeybees within a beehive. The existing methods of observing animals or insects also employ techniques of image recognition or measurement instruments and other sense tests, for example, as shown in Taiwan Patent No. 1238653, an ecological monitoring system has been disclosed, in which two light sensors are to be set at the position corresponding to the road, near rivers or other pre-construction site of the work, and also at the rear of a light sensor recording device is configured so that when a moving object passes through the two optical sensors, the optical sensors are activated to start the recording device to take pictures and record the time, location, number and other relevant information of the photo being taken. However, such a mechanism can only confirm whether the observed object has passed a predetermined location, but not able to tell if the object has the behaviors of in-and-out activity or wandering activity about the beehive. Especially the research on honeybee behaviors must be able to accurately identify the number of honeybees entering or leaving from a beehive, so as to determine if the honeybees have decreased or increased in number.

However due to the behavior of the honeybees having the tendency to move back and forth from the beehives, the conventional monitoring method is prone to cause an erroneous judgment.

Therefore, it is highly desirable to propose a novel honeybee behavior monitoring mechanism which does not require intensive manpower and is capable of accurately obtaining the required data for honeybee behavioral study in consideration of both the honeybee behaviors and research requirement.

### SUMMARY OF THE INVENTION

The instant disclosure provides a honeybee behavior monitoring method used in a honeybee behavior monitoring device. The honeybee behavior monitoring device comprises a first sensing unit disposed at an exterior of a beehive entrance, a second sensing unit disposed at an interior of the beehive entrance and a counting unit having a counter. The honeybee behavior monitoring method comprising: generating a first detection signal as the first sensing unit being activated by a honeybee passing through the beehive entrance; generating a second detection signal as the second sensing unit being activated by a honeybee passing through the beehive entrance; receiving the first signal of the first sensing unit and the second signal of the second sensing unit via the counting unit; and counting the number of honeybees passing in and out of a beehive via the counter. When the counting unit receives sequentially the second signal and the first signal, one count is added to a departing count when a honeybee is judged to be leaving the beehive, and one count is added to an entry count if the bee is judged to be entering the beehive.

The instant disclosure further provides a honeybee behavior monitoring device. The honeybee behavior monitoring device comprises a first sensing unit, a second sensing unit and a counting unit. The first sensing unit is disposed at an exterior of a beehive entrance and generates a first detection signal upon being activated by a honeybee passing through the beehive entrance. The second sensing unit is disposed at an interior of the beehive entrance and generates a second detection signal upon being activated by a honeybee passing through the beehive entrance. The counting unit receives the first signal of the first sensing unit and the second signal of the second sensing unit, and has a counter for counting the number of honeybees passing in and out of a beehive. When the counting unit receives sequentially the second signal and the first signal, one count is added to a departing count when a honeybee is judged to be leaving the beehive, and one count is added to an entry count if the bee is judged to be entering the beehive.

The instant disclosure further provides a honeybee behavior monitoring system, and the honeybee behavior monitoring system comprises at least a honeybee behavior monitoring device, a transmission unit, at least one gateway and a rear-end server. The honeybee behavior monitoring device is disposed within a beehive for counting and recording an activity of in-and-out of honeybees of the beehive. The honeybee behavior monitoring device comprises a first sensing unit, a second sensing unit and a counting unit. The first sensing unit is disposed at the exterior of the entrance of the honeybee hive, and generates a first detection signal upon being activated by a bee passing through. The second sensing unit is disposed at an interior of the entrance of the beehive, and generates a second detection signal upon being activated by a bee passing through. The counting unit receives the first signal of the first sensing unit and the second signal of the second sensing unit. When the counting unit receives sequentially the second signal and the first signal, one count is added to the departing count as a honeybee is judged to be leaving the beehive, and one count is added to the entry count as the honeybee is judged to be entering the beehive. After that, the transmission unit transmits the in-and-out activity counts. The gateway is adapted for receiving data of the in-and-out activity counts of honeybees transmitted by the at least one honeybee behavior monitoring device disposed nearby. The rear-end server receives data of the in-and-out activity counts transmitted from the at least one gateway for storing in a database thereof, so as to obtain an analysis of honeybee behaviors according to the status of the in-and-out activity counts of the honeybees of the at least a honeybee behavior monitoring device.

To sum up, the honeybee behavior monitoring method, device and system provided by the instant disclosure are characterized by employing two sensing units to obtain the in-and-out counts of honeybees which works in concert with a timing mechanism to reduce misjudgments occurred due to abnormal in-and-out activities or wandering activity of honeybees near a beehive. The instant disclosure reduces manpower consumption but increases accuracy for data compiling, recording and analysis for research purposes. Moreover, the instant disclosure senses the environment factors within and outside of a beehive and generates the internal and external environmental data accordingly. After that, the data is transmitted through a wireless sensing network to the gateway and finally to the rear-end server in order to achieve integrated studies on honeybee behaviors.

For further understanding of the instant disclosure, reference is made to the following detailed description illustrating the embodiments and embodiments of the instant disclosure. The description is only for illustrating the instant disclosure, not for limiting the scope of the claim.

### BRIEF DESCRIPTION OF THE DRAWINGS

Embodiments are illustrated by way of example and not by way of limitation in the figures of the accompanying drawings, in which like references indicate similar elements and in which:
FIG. 1 is a schematic view of the interior of the honeybee behavior monitoring device according to the instant disclosure.
FIG. 2 is another schematic view of the interior of the honeybee behavior monitoring device according to the instant disclosure.
FIGS. 3A to 3D are schematic views of two sensing units each performing the in-and-out activity counts of the honeybee behavior monitoring device according to the instant disclosure.
FIG. 4 is a system configuration view of the honeybee behavior monitoring device according to the instant disclosure.
FIG. 5 is a system schematic view of the honeybee behavior monitoring device according to a preferred embodiment of the instant disclosure.

### DETAILED DESCRIPTION OF PREFERRED EMBODIMENTS

The aforementioned illustrations and following detailed descriptions are exemplary for the purpose of further explaining the scope of the instant disclosure. Other objectives and advantages related to the instant disclosure will be illustrated in the subsequent descriptions and appended drawings. In the drawings, the size and relative sizes of layers and regions may be exaggerated for clarity.

It will be understood that, although the terms first, second, third, and the like, may be used herein to describe various elements, components, regions, layers and/or sections, these elements, components, regions, layers and/or sections should not be limited by these terms. These terms are only to distinguish one element, component, region, layer or section from another region, layer or section discussed below could be termed a second element, component, region, layer or section without departing from the teachings of the instant disclosure. As used herein, the term "and/or" includes any and all combinations of one or more of the associated listed items.

### [One embodiment of a honeybee behavior monitoring device]

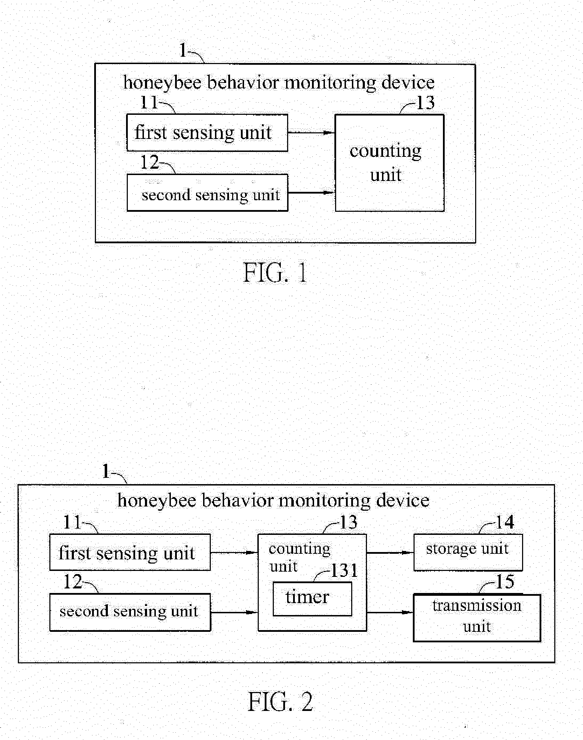

FIG. 1 is a schematic view of the interior of the honeybee behavior monitoring device according to the instant disclosure. The honeybee behavior monitoring device is applicable for monitoring the behaviors of the honeybees. The monitoring device 1 may be disposed within a beehive and includes a first sensing unit 11 and a second sensing unit 12 and a counting unit 13. The first sensing unit 11 is disposed at an exterior of the entrance of the beehive and generates a first detection signal upon being activated by a bee passing through the hive entrance; the second sensing unit 12 is disposed at an interior of the entrance of the beehive and generates a second detection signal upon being activated by a bee passing therethrough. The first sensing unit 11 and the second sensing unit 12 are adapted to determine the in-and-out activity of honeybees by a beehive, and the generated first and second signals are used to determine if the honeybee enters or departs from the hive.

Specifically, an infrared disruption mechanism can be used for the first sensing unit 11 and the second sensing unit 12 to determine its activation. When a honeybee passes through the beehive, the infrared light generated by any of the sensing units between two terminal elements is interrupted, allowing the sensing unit to be activated.

It should be noted that infrared interruption is merely an implementation and the instant disclosure should not be limited to this implementation means, on the other hand, any other means could be adopted for achieving the same effect.

The counting unit 13 is adapted to receive the first signal generated by the first sensing unit and the second signal generated by the second sensing unit and the counting unit 13 also includes a counter for counting the number of honeybees entering and departing from the beehive, and according to above, the counting unit 13 determines the in-and-out activity of honeybees by means of the first and second sensing signals.

Specifically, a honeybee is estimated to pass through the first sensing unit 11 disposed at an exterior of the entrance and then the second sensing unit 12 disposed at an interior of the entrance when entering into a beehive. Conversely, a honeybee is predicted to pass through the second sensing unit 12 disposed at an interior of the entrance and then the first sensing unit 11 disposed at an exterior of the entrance when departing the beehive. Therefore, when the counting unit 13 receives sequentially the second signal and then the first signal, one count is added to the departing count as a honeybee is judged to be leaving the beehive, whereas when the counting unit 13 receives sequentially the first signal and then the second signal, one count is added to the entry count as a honeybee is judged to enter the beehive. Accordingly, the honeybee behavior monitoring device for recording the in-and-out activity of honeybees provides a real time monitoring for a long period of time thereby reducing the defects of the existing methods of observing by sight, and also the data can be compiled and integrated for subsequent analysis and research purposes.

FIG. 2 is another schematic view of the interior of the honeybee behavior monitoring device according to the instant disclosure. Similarly, the honeybee behavior monitoring device 1 is also applicable for counting the in-and-out activity of honeybees entering in and departing from the beehive. As illustrated, the honeybee behavior monitoring device 1 includes a first sensing unit 11 and a second sensing unit 12 and a counting unit 13, all of which having the same functionality as those depicted and described in FIG. 1, with only the difference being that the honeybee behavior monitoring device of this embodiment is further provided with a storage unit 14 and a transmission unit 15; also, the counting unit 13 further includes a timer 131.

The storage unit 14 is adapted to store the in-and-out activity counts of honeybees recorded by the counting unit 13. For example, the honeybee behavior monitoring device 1 may employ an SD card module for storing data recorded by the counting unit 13 which will then be transmitted to a server of a remote-end monitoring center. To avoid transmission failures which results in data loss, the data of the departing count and the entry count can be stored in the storage unit 14.

The transmission unit 15 is adapted to transmit the in-and-out activity counts recorded by the counting unit 13 to another honeybee behavior monitoring device disposed nearby. In this embodiment, the transmission unit 15 adopts the concept of a wireless sensing network (WSNs) for data transmission, providing the convenience of transmitting data of the in-and-out activity counts of honeybees to a remote-end monitoring center. In other words, the data is transmitted to the adjacent honeybee behavior monitoring device, and then subsequently transmitted to a central device such as a gateway. It should be noted, wireless sensing network (WSNs) has the advantages of short distance transmission, low cost, low power consumption and easy for installation.

Since the movements of the honeybees are not restricted to a single or a regular movement, the honeybees may wander about a hive, and also move in a reverse direction, the purpose of a timing unit 131 in the counting unit 13 aims to prevent misjudgments of the in-and-out activity counts of honeybees detected by the first sensing unit 11 and the second sensing unit 12.

The timing unit 131 is activated when the counting unit 13 receives one of the first sensing signal or the second sensing signal, so that when the counting unit 13 does not receive either one of the first sensing signal or the second sensing signal within a predetermined period of time, it causes the counting unit 13 to cancel the record of the first sensing signal or the second sensing signal. In other words, in the condition that only one of the first sensing signal or the second sensing signal is received in absence of the other, this indicates that a honeybee is probably wandering about the hive or turning around to leave which may jeopardize the correct judgment of the next and following honeybees passing in and out of the hive if the record of the sensing signal remains unchanged. Therefore, the use of the timing unit 131 can eliminate the previously received signal to prevent misjudgments after a predetermined period of time in the absence of the other sensing signal. The predetermined period of time may be adjusted to any time according to the actual habits of honeybees. Usually it can be set between 0.1 second to 1.5 second to effectively reduce the misjudgments of the in-and-out activity counts of honeybees.

### [One embodiment of a honeybee behavior monitoring method]

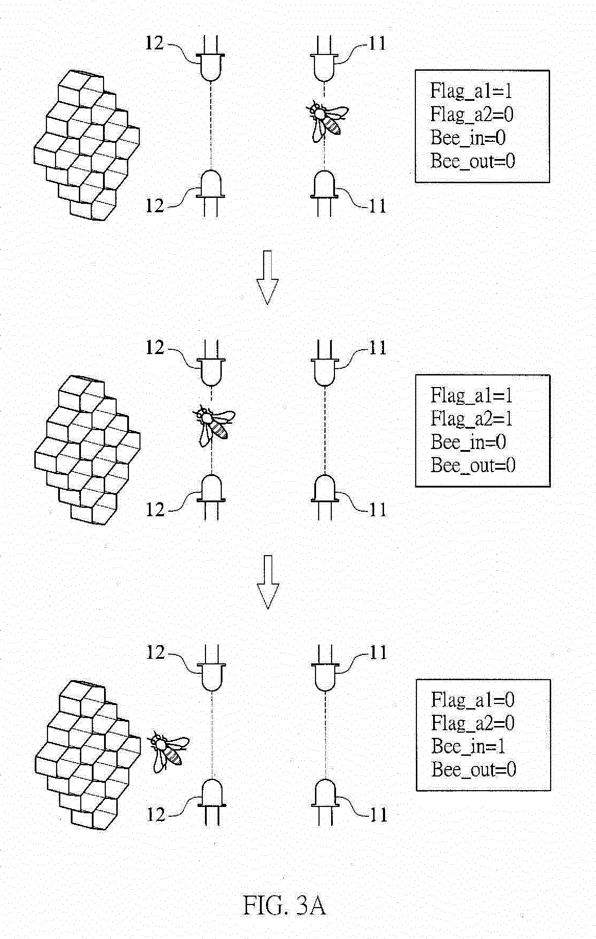

FIGS. 3A to 3D illustrate how the two sensing units perform the in-and-out activity counts of the honeybee behavior monitoring device of the instant disclosure, in which different conditions are included to further describe how the two sensing units count the in-and-out activity of the honeybees.

FIG. 3A illustrates the counting method of counting the in-and-out activity of a honeybee entering a beehive in a normal situation, i.e. when the first sensing unit 11 senses a honeybee is passing through, the first sensing unit 11 is activated to generate a first sensing signal, that is, the record message of the first signal (Flag_a1) is caused to change from a preset value of 0 to 1, subsequently, the honeybee continues to move towards the second sensing unit 12 and passes through the second sensing unit 12, which is then activated and the second signal is generated, that is, the record of the second signal (Flag_a2) is caused to change from a preset value of 0 to 1, at this time, when the preset values of the first sensing signal (Flag_a1) and the second sensing signal (Flag_a2) both are caused to sequentially change from 0 to 1, the honeybee is then judged by the sensing units that it is entering a beehive and thus one count is added to the entry count (Bee_in), and at the same time records of the first sensing signal (Flag_a1) and the second sensing signal (Flag_a2) are reset to a predetermined value of zero awaiting for the next activity.

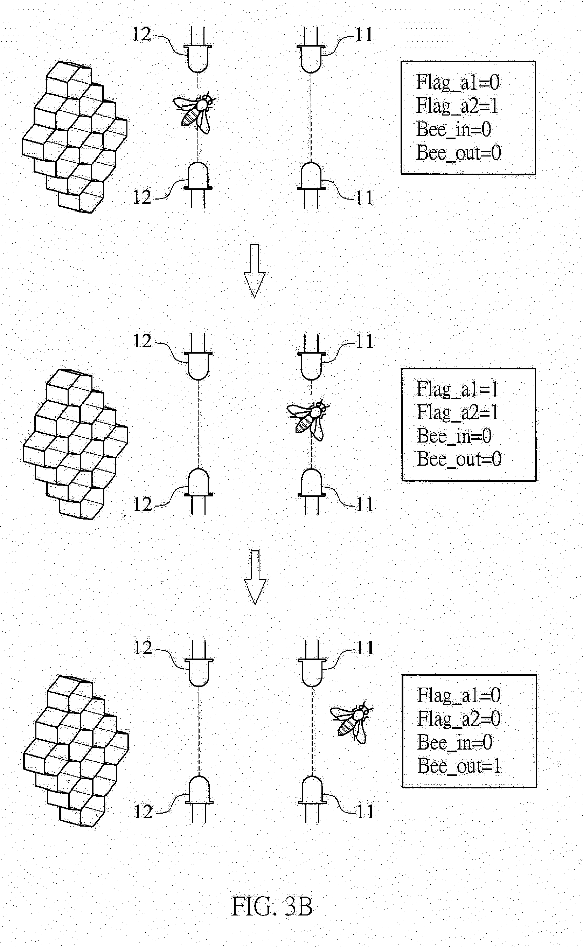

FIG. 3B illustrates the counting of the in-and-out activity of a honeybee leaving a beehive in a normal situation. As illustrated, when the second sensing unit 12 senses the honeybees passing through, the second sensing unit 12 is activated and a second sensing signal is thus generated, which causes the record of the second signal (Flag_a2) to change from a preset value of 0 to 1 but the record (Flag_a2= 1) remains the same without a further change, under this situation a misjudgment may occur if another honeybee moves from outside to the hive that causes the record of the first sensing signal (Flag_01) to change to 1 from the preset value of 1, thus causing a misjudgment of the departing activity count of honeybees, i.e. the records (Flag_a2 and Flag_a1) are caused to sequentially change to 1.

Subsequently, when the bee continues to move outward and pass through the first sensing unit 11, the first sensing unit 11 is triggered to change the first sensing signal (Flag_a1) from 0 to 1, such that the second sensing unit 12 is also sequentially triggered to change the second sensing signal (Flag_a2) from 0 to 1, the bee is then judged to depart from the beehive and one count is added to the entry count (Bee_out) while at the same time the first sensing signal (Flag_a1) and the second sensing signal (Flag_a2) are reset to the predetermined value 0. Therefore, the possibility of a misjudgment can be ruled out even if a bee is wandering around a beehive.

Subsequently, when the honeybee continues to move outward in the direction of the first sensing unit 11 and triggers the first sensing unit 11 and thus causes the record to change (Flag_a1 = 1), and after the second sensing unit 12 (Flag_a2 = 1) and the first sensing unit 11 (Flag_a1 = 1) both are caused to sequentially change to 1, it is judged that the honeybee is departing from the hive and one count is added to the entry count (Bee_out) while at the same time both records of the first sensing unit 11 and the second sensing unit 12 are reset to the predetermined value zero to eliminate the possibilities of misjudgments .

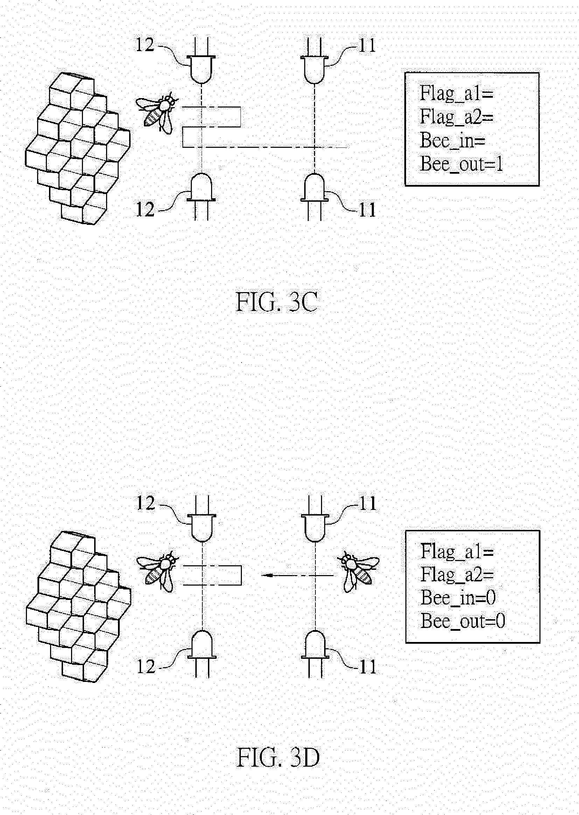

FIG 3C is a schematic view showing the in-and-out activity counts of honeybees in an abnormal situation. As illustrated, when the second sensing unit 12 senses from the honeybees move from the beehive to the outside of the beehive, the second sensing unit 12 is activated and a second sensing signal is thus generated, and then the record of the second signal (Flag_a2) is caused to change from a preset value of 0 to 1. However, as the honeybee moves back and forth around the second sensing unit 12, the record remains unchanged (Flag_a2 =1 and Flag_a1=0) in the absence of other (first sensing signal) signals.

Subsequently, when the honeybees continue to move outward in the direction of the first sensing unit 11 to trigger the first sensing unit 11, the record is caused to change (Flag_a1 = 1) from 0 to 1, such that both the second sensing unit 12(Flag_a2 = 1) and the first sensing unit 11 (Flag_a1 = 1) are caused to sequentially change to 1, it is judged that the honeybee is departing from the hive and one count is added to the entry count (Bee_out), and the records of the first sensing unit 11 and the second sensing unit 12 are reset to the predetermined value zero so as to eliminate the possibilities of misjudgments.

FIG. 3D depicts the method of counting the departing of honeybees from the hive in an abnormal situation. As shown, a bee moves away from a beehive and passes through the second sensing unit 12, and then it moves back again towards the hive, but since the second sensing unit 12 is triggered that causes the record of the second sensing signals (Flag_a2) to change from 0 to 1, and because there is no other changes at the time, the record of the second sensing unit 12 (Flag_a2 = 1) remains unchanged. Under such situation, if another bee moves from outside to enter the beehive it will likely cause the record of the first sensing signal (Flag_a1) to change from 0 to 1, thereby causing a misjudgment (Flag_a2 and Flag_a1 has sequentially changed to 1) and a miscalculation of the in-and-out activity counts as a result.

Therefore, to avoid a misjudgment in such a situation, the counting unit of the instant disclosure is further provided with a timer that will automatically reset the counting activity. That is, when any one of the Flags is triggered and changed to 1 for a time longer than a predetermined period of time, the counting unit will automatically reset the Flag to zero. In the above case, because the bee flew back inside the hive again that causes Flag_a2 to remain at 1, this would result in a false count if the Flag is not reset back to zero when another bee enters into the beehive from outside.

Therefore, the timer is adapted to reset the Flag_a2 back to zero under certain conditions to avoid false counts. The aforementioned predetermined time may be set in a time interval appropriate for counting the in-and-out activity which may be 1 second, 0.5 seconds, and may be adjusted according to the habits of honeybees.

### [One embodiment of a honeybee behavior monitoring systems]

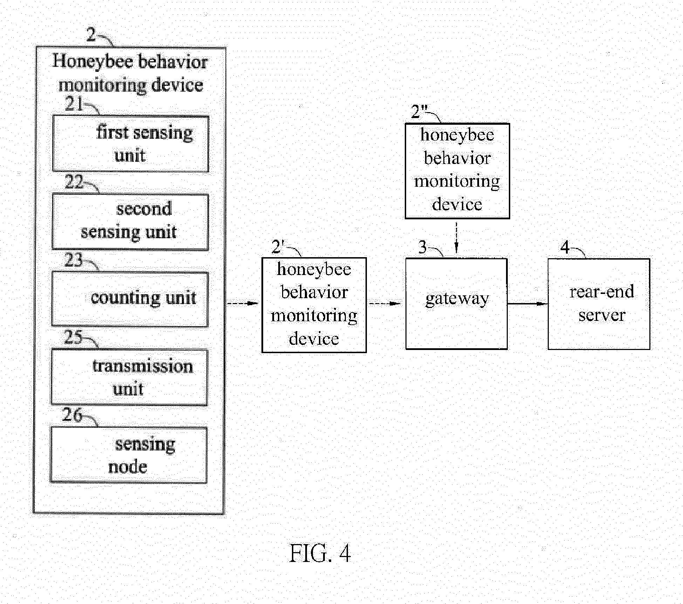

FIG. 4 is a system configuration diagram of the honeybee behavior monitoring device according to the instant disclosure. The descriptions in various foregoing embodiments mainly relate to the internal architecture of the honeybee behavior monitoring device. It should be taken into consideration that a comprehensive monitoring of the honeybee behaviors would require the configuration of a large number of monitoring devices and information collection centers for data storage and integration purposes, and thus the present embodiment will further illustrate the overall system configuration of the honeybee behavior monitoring system.

As shown, the honeybee behavior monitoring system includes at least one honeybee behavior monitoring device 2, at least one gateway 3 and a rear-end server 4, wherein the honeybee behavior monitoring device 2 can be configured within a beehive, and each of the bee behavior monitoring devices 2 includes a first sensing unit 21, a second sensing unit 22, a counting unit 23 and the transmission unit 25. The description of each of these units is similar to those illustrated in Figure 1 and Figure 2 and therefore is omitted herein for brevity.

In the present embodiment, the counting unit 23 records the counting of the in-and-out activity of honeybees after the first sensing unit 21 and the sensing unit 22 are sequentially triggered. After that, the counting data can be obtained and then transferred to the outside through the transmission unit 25. As described in the previous embodiment, the data between two honeybee behavior monitoring devices is transferred through a wireless sensing network, and accordingly, the data is transferred between each of the honeybee behavior monitoring devices 2, 2', 2", and also between the honeybee behavior monitoring devices 2, 2', 2" and the gateway 3 through a wireless sensing network for data transfer.

The gateway 3 can receive the in-and-out activity counts of at least one of the behavior monitoring device 2, 2 ', 2" nearby, and the number of the gateway 3 is not limited to one, and it can be adjusted to meet the requirements of the configuration of the behavioral monitoring device 2, 2 ', 2".

The rear-end server 4 is adapted to receive the in-and-out activity counts transmitted from at least one gateway 3 for the analysis of honeybee behaviors according to the data relating to the in-and-out activity counts stored in the honeybee behavior monitoring devices 2, 2 ', 2". Specifically, after the gateway 3 receives the data provided by the honeybee behavior monitoring device 2, 2', 2" that is regularly transmitted back to the rear-end server 4, the data is uploaded and transferred between the gateway 3 and the rear-end server 4 through a 2.50 network, or as well by means of a general network depending on the circumstances. Therefore, such data is instantaneously transmitted to the rear-end server 4 via a real time monitoring for subsequent data analysis and decision making performed by the rear-end server 4, thereby enabling the research staff to analyze and therefore judge and predict the numbers of honeybees which fail to return to their hives and to extrapolate if there is any occurrence of the Colony Collapse Disorder (CCD) or other abnormal conditions.

Each of the honeybee behavior monitoring devices 2, 2 ', 2 " can also include a sensor node 26 for sensing internal and external environments of a beehive and the data of the internal and external environments includes information about the temperature and humidity around a beehive. Subsequently, data of the internal and external environments is transferred to the transmission unit 25, and then transferred to the rear-end server 4 via each gateway 3 for further analysis of honeybee behaviors according to the in-and-out activity and the beehive environmental data.

Similarly, the honeybee behavior monitoring device 2 can be provided with a storage unit (not shown) for storing the in-and-out activity counts recorded by the counting unit 23, as well as the internal and external environmental data around a beehive obtained by the sensor node 26 to avoid a dropout situation in the data transfer process. It should be noted that the storage unit may be optionally disposed according to the actual requirement.

In addition, the gateway 3 is also equipped with a weather module 3 (not shown) which can be used to monitor the rainfall, wind direction, wind speed and temperature around the gateway 3 to generate meteorological data which is transferred back to the rear-end server 4 as part of the collective information data for the analysis of bee behaviors for research purposes.

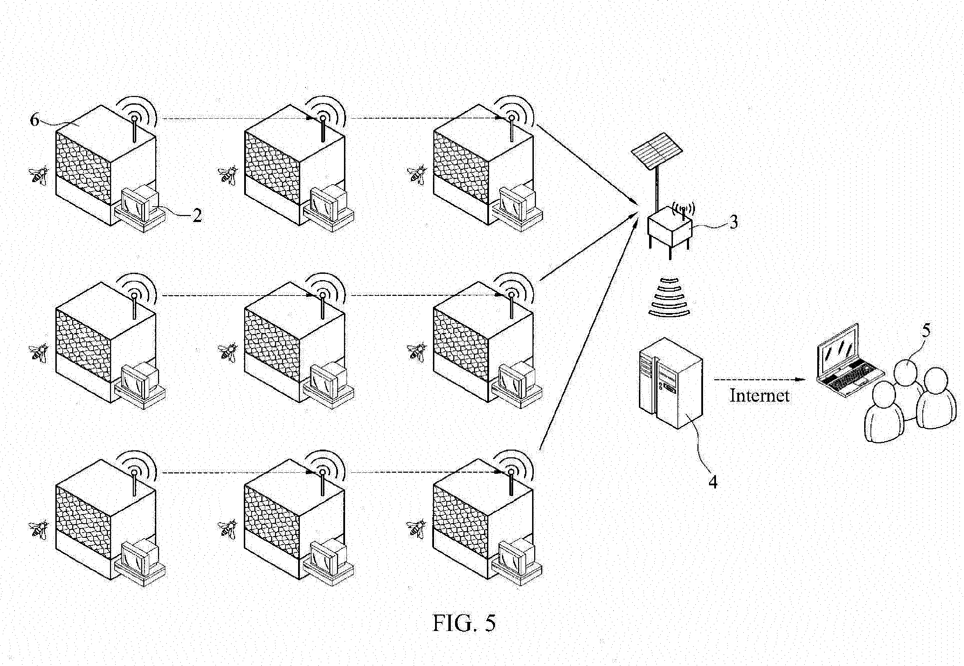

FIG 5 is a system schematic view of the honeybee behavior monitoring device according to the instant disclosure. As illustrated, each of the plurality of beehive 6 has a honeybee behavior monitoring device 2 configured therein and each of the honeybee behavior monitoring device 2 uses a wireless sensing network for data transfer therebetween, wherein the data not only includes the in-and-out activity counts of honeybees, but also the environmental data around the beehive 6 and may even include the weather information, and all of the data is finally transferred to the gateway 3, which is then transferred to the rear-end server 4 through a 2.5G network or a cable network or wireless network, thereby allowing the rear-end server 4 to analyze these data and behaviors and habits of the honeybees, such as, what kind of temperatures and humidity conditions may cause the reduction of the in-and-out activity of honeybees, or what kind of weather conditions may affect the frequency the honeybees going out. Through integrating and analyzing all the associated data, it is possible to gain a better understanding of the behaviors of the honeybees.

Moreover, the research data analyzed and provided by the rear-end server 4 may be displayed on a website platform for allowing the research staff 5 to access to and view the data via the internet, wherein the relevant research data may include historical data inquiries, such as day statistics, month statistics or year statistics which can be used in conjunction with mapping software such as Google map for conducting dynamic inquiries at different locations to facilitate the joint research with more research staff.

To sum up, the honeybee behavior monitoring method, device and system provided by the instant disclosure are characterized by employing two sensing units to obtain the in-and-out counts of honeybees which works in concert with a timing mechanism to reduce misjudgments occurred due to abnormal in-and-out activities or wandering activity of honeybees near a beehive. The instant disclosure reduces manpower consumption but increases accuracy for data compiling, recording and analysis for research purposes. Moreover, the instant disclosure senses the environment factors within and outside of a beehive and generates the internal and external environmental data accordingly. After that, the data is transmitted through a wireless sensing network to the gateway and finally to the rear-end server in order to achieve integrated studies on honeybee behaviors.

The descriptions illustrated *supra* set forth simply the preferred embodiments of the instant disclosure; however, the characteristics of the instant disclosure are by no means restricted thereto. All changes, alterations, or modifications conveniently considered by those skilled in the art are deemed to be encompassed within the scope of the instant disclosure delineated by the following claims.

## Claims

1. A honeybee behavior monitoring method, used in a honeybee behavior monitoring device (1, 2, 2', 2"), the honeybee behavior monitoring device (1, 2, 2', 2") comprising a first sensing unit (11, 21) disposed at an exterior of a beehive entrance, a second sensing unit (12, 22) disposed at an interior of the beehive entrance and a counting unit (13, 23) having a counter, the honeybee behavior monitoring method comprising:
generating a first detection signal as the first sensing unit (11, 21) being activated by a honeybee passing through the beehive entrance;
generating a second detection signal as the second sensing unit (12, 22) being activated by a honeybee passing through the beehive entrance;
receiving the first signal of the first sensing unit (11, 21) and the second signal of the second sensing unit (12, 22) via the counting unit (13, 23); and
counting the number of honeybees passing in and out of a beehive via the counter;
wherein when the counting unit (13, 23) receives sequentially the second signal and the first signal, one count is added to a departing count when a honeybee is judged to be leaving the beehive, and one count is added to an entry count if the bee is judged to be entering the beehive.

2. The honeybee behavior monitoring method according to claim 1, wherein the counting unit (13, 23) further includes a timing unit which is activated when the counting unit (13, 23) receives one of the first sensing signal and the second sensing signal, so that when the counting unit (13, 23) does not receive either another one of the first sensing signal or the second sensing signal within a predetermined period of time, it causes the counting unit (13, 23) to cancel the record of the first sensing signal or the second sensing signal.

3. The honeybee behavior monitoring method according to claim 1, further comprising a storage unit (14) for storing the in-and-out activity counts of the honeybees.

4. The honeybee behavior monitoring method according to claim 1, further comprising a transmission unit (15, 25) for transmitting the in-and-out activity counts of honeybees to another honeybee behavior monitoring device (1, 2, 2', 2") disposed nearby.

5. A honeybee behavior monitoring device (1, 2, 2', 2"), comprising:
a first sensing unit (11, 21) disposed at an exterior of a beehive entrance and generating a first detection signal upon being activated by a honeybee passing through the beehive entrance;
a second sensing unit disposed at an interior of the beehive entrance and generating a second detection signal upon being activated by a honeybee passing through the beehive entrance; and
a counting unit (13, 23) for receiving the first signal of the first sensing unit (11, 21) and the second signal of the second sensing unit (12, 22) and having a counter for counting the number of honeybees passing in and out of a beehive;
wherein when the counting unit (13, 23) receives sequentially the second signal and the first signal, one count is added to a departing count when a honeybee is judged to be leaving the beehive, and one count is added to an entry count if the bee is judged to be entering the beehive.

6. The honeybee behavior monitoring device (1, 2, 2', 2") of claim 5, wherein the counting unit (13, 23) further includes a timing unit which is activated when the counting unit (13, 23) receives one of the first sensing signal and the second sensing signal, so that when the counting unit (13, 23) does not receive either another one of the first sensing signal or the second sensing signal within a predetermined period of time, it causes the counting unit (13, 23) to cancel the record of the first sensing signal or the second sensing signal.

7. The honeybee behavior monitoring device (1, 2, 2', 2") of claim 5, further comprising a storage unit (14) for storing the in-and-out activity counts of the honeybees.

8. The honeybee behavior monitoring device (1, 2, 2', 2") of claim 5, further comprising a transmission unit (15, 25) for transmitting the in-and-out activity counts of honeybees to another honeybee behavior monitoring device (1, 2, 2', 2") disposed nearby.

9. A honeybee behavior monitoring system, comprising:
at least a honeybee behavior monitoring device (1, 2, 2', 2") disposed within a beehive for counting and recording an activity of in-and-out of honeybees of the beehive, and each of the honeybee behavior monitoring device (1, 2, 2', 2") comprising:
a first sensing unit (11, 21), disposed at the exterior of the entrance of the honeybee hive, which generates a first detection signal upon being activated by a bee passing through;
a second sensing unit (12, 22), disposed at an interior of the entrance of the beehive, which generates a second detection signal upon being activated by a bee passing through; and
a counting unit (13, 23) for receiving the first signal of the first sensing unit (11, 21) and the second signal of the second sensing unit (12, 22);
wherein when the counting unit (13, 23) receives sequentially the second signal and the first signal, one count is added to the departing count as a honeybee is judged to be leaving the beehive, and one count is added to the entry count as the honeybee is judged to be entering the beehive;
a transmission unit (15, 25) for transmitting the in-and-out activity counts;
at least one gateway (3) adapted for receiving data of the in-and-out activity counts of honeybees transmitted by the at least one honeybee behavior monitoring device (1, 2, 2', 2") disposed nearby; and
a rear-end server (4) for receiving data of the in-and-out activity counts transmitted from the at least one gateway (3) for storing in a database thereof and so as to obtain an analysis of honeybee behaviors according to the status of the in-and-out activity counts of the honeybees of the at least a honeybee behavior monitoring device (1, 2, 2', 2").

10. The honeybee behavior monitoring system of claim 9, wherein the at least one honeybee behavior monitoring device (1, 2, 2', 2") further comprises a sensor node for sensing the environment within and outside of the beehive and generating internal and external environmental data thereof accordingly, and the internal and external environmental data of the beehive are transmitted to the transmission unit (15, 25) for analyzing honeybee behaviors.

11. The honeybee behavior monitoring system of claim 10, wherein the internal and external environmental data are transmitted to the rear-end server (4) through the at least one gateway (3) for allowing the rear-end server (4) to further analyze honeybee behaviors according to the in-and-out activity counts of the honeybee behavior monitoring device (1, 2, 2', 2") and the internal and external environmental data.

12. The honeybee behavior monitoring system of claim 9, wherein the data is transferred between each of the honeybee behavior monitoring device (1, 2, 2', 2")s and between the honeybee behavior monitoring device (1, 2, 2', 2")s and the gateway (3) through a wireless sensing network for data transfer.

13. The honeybee behavior monitoring system of claim 9, wherein each of the at least a honeybee behavior monitoring device (1, 2, 2', 2") further comprises a storage unit (14) for storing the in-and-out activity counts of the honeybees.

14. The honeybee behavior monitoring system of claim 9, wherein the at least one gateway (3) comprises a weather module for monitoring the rain amount, wind direction, wind speed and temperature to generate meteorological data.
